# EUROPEAN PATENT SPECIFICATION

(11) **EP 1 062 030 B1**
(45) Date of publication and mention of the grant of the patent: **24.09.2003**
(21) Application number: 97948918.4
(22) Date of filing: 19.12.1997
(51) Int. Cl.: B01J 8/40, F22B 31/00, F23C 10/28, F28D 13/00, F28F 13/10

(54) **METHOD AND APPARATUS FOR CONTROLLING HEAT TRANSFER FROM SOLID PARTICLES IN A FLUIDIZED BED**
VERFAHREN UND VORRICHTUNG ZUR STEUERUNG DES WÄRMEÜBERGANGS VON FESTSTOFFPARTIKELN IN EIN WIRBELBETT
PROCEDE ET DISPOSITIF DE REGULATION DU TRANSFERT THERMIQUE A PARTIR DE PARTICULES SOLIDES DANS UN LIT FLUIDISE

(43) Date of publication of application: 27.12.2000
(73) Proprietor: Foster Wheeler Energia Oy, 00440 Helsinki (FI)
(72) Inventor: HYPPÄNEN, Timo, FIN-48710 Karhula (FI)
(74) Representative: HOFFMANN - EITLE
(86) International application number: FI9700811
(87) International publication number: WO99032217

(56) References cited:
- WO-A1-97/49963
- DE-A1- 2 753 409
- GB-A- 761 072
- GB-A- 929 156
- US-A- 4 544 020
- US-A- 5 184 671
- US-A- 5 273 000
- PATENT ABSTRACTS OF JAPAN, Vol. 8, No. 106, (C-223); & JP 59022649 A (MITSUI ZOSEN K.K.) 4 February 1984.

## Description

### FIELD OF THE INVENTION

The present invention relates to a method of and an apparatus for controlling heat transfer in a fluidized bed reactor, according to the preambles of appended independent claims.

The present invention particularly relates to a method and an apparatus for recovering heat from solid particles in a fluidized bed reactor comprising a processing chamber, having a fluidized bed of solid particles therein, and a heat transfer chamber, being in solid particle communication with the processing chamber and having heat transfer surfaces disposed therein. The heat transfer chamber may be connected in various ways to the processing chamber so that there is solid particle exchange between the chambers. The heat transfer chamber may in some special case even be formed within the processing chamber itself.

The present invention relates to a method and apparatus applicable in atmospheric, as well as, pressurized fluidized bed reactor systems.

### BACKGROUND OF THE INVENTION

Fluidized bed reactors, such as circulating fluidized bed reactors, are used in a variety of different combustion, heat transfer, chemical or metallurgical processes. Typically heat, originating from combustion or other exothermic processes, is recovered from the solid particles of the fluidized bed by using heat transfer surfaces. Heat transfer surfaces conduct the recovered heat to a medium, such as water or steam, which transports the heat from the reactor.

Said heat transfer surfaces are usually located in the processing chamber or within a convection section arranged in the gas pass after the processing chamber or, in circulating fluidized bed reactors, within a particle separator. Additional heat transfer surfaces may be arranged in separate heat transfer chambers (HTC), which may be a part of the processing chamber, a separate chamber adjacent to the processing chamber or, in circulating fluidized bed reactors, part of the solid particles recycling system.

In a heat transfer chamber (HTC), heat is typically recovered by continuously introducing hot solid particles from e.g. the processing chamber into the HTC, recovering heat from said solid particles in the HTC, and continuously discharging said solid particles from the HTC into the processing chamber. Said heat recovery takes place by using heat transfer surfaces disposed in the HTC.

The HTC thereby comprises inlet means for introducing a continuous flow of hot solid particles from the processing chamber into the HTC, heat transfer surfaces and means for transporting the heat recovered from the hot solid particles out from the HTC, and outlet means for continuously recycling solid particles discharged from the HTC into the processing chamber.

Accurate and fast controllability of the heat transfer is an important consideration in many applications of fluidized bed reactors, such as steam boilers, where maintaining constant steam temperature may require rapid and accurate adjustments of heat transfer. The reason for the need of controlling action may be a changing demand of the produced steam or abnormality in the fuel quality or fuel feed or some other abnormality in the system. Also there may be a need to adjust the system to proper operating state. In steam boilers, additional requirements to adjust the heat transfer arise from the fact that heat is usually recovered in many stages, i.e. in evaporators, superheaters, economizers and reheaters, which may need independent control.

From the point of view of the processes in a fluidized bed reactor, the aim of the heat transfer control is to maintain optimum performance, especially taking into account the harmful emissions or combustion efficiency. Usually, this implies that the temperature of the reactor should stay constant, even in conditions of varying heat recovery and fuel input rates.

In circulating fluidized bed reactors, the rate of heat recovery in the upper parts of the furnace can be varied by changing the bed density. This can be realized by collecting part of the bed material to a storage, as shown in US patent 4,823,739 or, more simply and quickly, by changing the fluidizing gas velocity. However, the fluidizing gas is an important factor in reactions taking place in the processing chamber of the circulating fluidized bed reactor. To maintain an economically and ecologically favorable operation, changes in the fluidizing gas require other simultaneous changes, such as changes in the fuel feed rate. Thus, this method of heat transfer control effects all heat transfer surfaces of the system and can be favorably put into effect only in the time scale of the thermal time constant of the whole system.

Due to the large heat capacities involved, the thermal time constant of a fluidized bed reactor, i.e. the time when, after a step-wise stimulus, approximately two thirds of its temperature change has taken place, can be very long, e.g. 25 minutes. Thus, the heat transfer from a fluidized bed based an heat transfer surfaces having an invariable thermal contact to the bed is not fast enough for many applications of fluidized bed reactors.

To render possible a fast control of the heat transfer from fluidized bed reactors, with time constant of e.g. some tens of seconds, different constructions utilizing separate HTCs have been developed. Because also in an HTC the temperature of the solid particles can vary only slowly, different techniques have been developed, which do not depend an varying the temperature of said solid particles to control the heat transfer.

The simplest means for such control is to vary, the amount of hot material in contact with the heat transfer surfaces in the HTC so that only a variable part of the heat transfer surfaces is covered by the solid particles. This kind of construction was disclosed e.g. in US patent 4,813,479. However, to control the level of solid particles at least one additional flow duct and a controlling valve is needed, which increases the complexity and costs of the system.

Another approach, which has been used in circulating fluid bed reactors, is to divide the flow of hot solid particles after the particle separator to two channels, of which only one has heat transfer surfaces. Thus, when varying the division ratio of solid particles flowing through said two channels, the rate of heat transfer is varied. In order to function properly, this technique also requires a rather complicated construction, such as that disclosed in US patent 5,140,950, in which many compartments and channels are used.

HTCs are normally bubbling fluidized beds with low gas flow velocities, e.g. from 0.1 to 0.5 m/s. The transport of solid particles through an HTC or through its different channels can be controlled by mechanical valves or by varying the fluidizing gas velocity, and thereby the bed height, in different portions of the HTC.

It is known that the heat transfer coefficient of a heat transfer surface in a fluidized bed can to some extent be varied by changing the velocity of fluidizing gas flow.

(The heat transfer coefficient refers to the amount of thermal energy transferred across one square meter of the heat transfer surface per one degree temperature difference between the bed and the medium transporting the heat away.) This is due to the fact that with higher velocities of fluidizing gas flow, the solid particle movements are more intense and give a more uniform temperature distribution in the fluid bed, and, thus, the heat transfer on the heat transfer surfaces is enhanced.

Because, in typical HTC constructions, the gas flow velocities are related to the particle flow, they cannot be independently varied. US patent 5,425,412 discloses an arrangement in the return duct of a circulating fluidized bed reactor, where the HTC contains a separate heat transfer section where the gas flow velocity can be varied independently from the particle flow. Moreover, US patent 5,406,914 discloses another arrangement with a separate heat transfer section which has also an additional passage for particles directly from the processing chamber to the HTC. With a similar principle can also be constructed a separate HTC, with a heat transfer gas flow which is independent of the particle transfer gas flow.

However, at least when high turn down ratio is needed, the methods disclosed in US patents 5,425,412 and 5,406,914 do not provide ideal control of heat transfer, because in bubbling fluidized beds the heat transfer coefficient typically changes from a low value to a much higher value rather abruptly within a narrow fluidizing gas flow velocity range. Thus, by using the flow velocity as a control parameter, it is not possible to achieve a smooth and continuously controllable operation on a large control range.

It has been suggested in GB patent publication 929,156 a method of heat exchange between a fluid circulating through a heat exchange surface and a granular powdered material by fluidizing the granular powdered material in a pulsating manner. Thereby, during the time of each pulse, the injection of fluidization gas is effected at a velocity which is similar to or higher than that of the velocity of fluidization gas during continuous fluidization, whereas no injection of fluidizing gas takes place between the pulses. The periodic pulsation comprises relative short injection periods alternating with longer stationary periods. Thereby two problems mentioned in the GB patent are dealt with. The quantity of fluidizing gas is decreased and the granular material is maintained for longer periods in a state of maximum density.

The method suggested in GB 929,156 does not, however, appear to be applicable in fluidized bed reactors, in which as stable as possible process conditions are desired. All kinds of variations having a negative influence an the process have to be avoided. The great variation in fluidization velocity, i.e. between zero fluidization and a velocity similar to or higher than conventional fluidization velocity, may have such a negative impact an other process variables.

A further drawback of the suggested heat transfer control based an pulsed gas flow velocity, including zero gas flow velocities, is the poor mixing of the solid particles in the HTC. Particularly if afterburning takes place, there is a risk of overheating and agglomeration of bed material at some locations of the HTC. It has also been noticed that nozzles in the bottom of a fluidized bed reactor have a tendency to leak unless a minimum gas velocity is maintained in the reactor.

### OBJECTS OF THE INVENTION

It is an object of the present invention to provide a method and apparatus for controlling heat transfer in fluidized bed reactors in which the above mentioned drawbacks have been minimized.

It is especially an object of the present invention to provide a method and apparatus in which heat transfer in an HTC in a fluidized bed reactor can be controlled rapidly and accurately over a large control range, even at low heat transfer rates without a risk of overheating.

### SUMMARY OF THE INVENTION

The present invention provides an improved method of and apparatus for controlling heat transfer in a fluidized bed reactor, which includes a heat transfer chamber (HTC) with a bed of solid particles therein, means for continuously, i.e. substantially uninterruptedly, introducing fluidizing gas into the heat transfer chamber for fluidizing said bed of solid particles therein and heat transfer surfaces in contact with said bed of solid particles in said heat transfer chamber, the heat transfer surfaces recovering heat from solid particles in the heat transfer chamber. The fluidized bed reactor according to the present invention further comprises means for varying the continuous fluidization of the bed of solid particles in the heat transfer chamber according to a periodical function. The flow of fluidizing gas, which is continuously introduced into the heat transfer chamber, is periodically varied between two or more different flow velocities, for controlling the instantaneous heat transfer from solid particles to said heat transfer surfaces in said heat transfer chamber.

The effective or average overall heat transfer in the heat transfer chamber is thereby controlled by varying a parameter of the periodically varying flow of fluidizing gas being introduced into the heat transfer chamber.

The present invention is applicable in different types of fluidized bed reactors, such as in bubbling fluidized bed reactors or in circulating fluidized bed (CFB) reactors. Thereby the fluidized bed reactor comprises a processing chamber, such as a combustion chamber, in solid particle flow communication with the heat transfer chamber. Heat generated in said processing chamber is thereby recovered with the heat transfer surfaces in the heat transfer chamber. The heat transfer chamber, in which heat transfer is controlled according to the present invention, may even be an integral part of a bubbling fluidized bed reactor, i.e. at least a portion of the bubbling bed itself may form a heat transfer "chamber" zone.

The invention is also applicable in fluidized bed ash coolers, cooling ash and/or other bed material discharged from the combustion chamber of a fluidized bed reactor. The heat transfer chamber may be connected to a CFB as an external heat exchanger in the solid material recirculation loop or as an internal heat exchanger connected to the internal bed material circulation.

Thereby, according to a preferred embodiment of the present invention, there is provided an improved method of recovering heat from solid particles in a fluidized bed reactor, utilizing an HTC, comprising the steps of:
- continuously introducing hot solid particles from the processing chamber into the HTC, and continuously discharging said solid particles from the HTC into the processing chamber,
- recovering heat from said solid particles in the HTC by heat transfer surfaces,
- varying the flow velocity of fluidizing gas introduced into the HTC according to a periodic function.

Additionally, the method may have the steps of:
- observing a possible need to change the heat transfer rate, e.g. by monitoring the temperature of the medium which convects the recovered heat from the HTC, and
- varying a parameter of the flow velocity of the fluidizing gas, in the heat transfer chamber, to change the effective heat transfer rate in accordance with observed need.

There is also according to a preferred embodiment of the present invention, provided an improved apparatus for recovering heat from solid particles in a fluidized bed reactor, utilizing an HTC, said apparatus comprising:
- means for continuously introducing solid particles from the processing chamber into the HTC and means for continuously discharging said solid particles from the HTC into the processing chamber
- heat transfer surfaces for recovering heat from said solid particles and means to transport the recovered heat from the HTC
- means for providing periodically varying flow of fluidizing gas.

Additionally, the apparatus may have:
- means for observing a possible need to vary the heat transfer rate and
- means for varying a parameter of said periodically varying flow of fluidizing gas.

According to one aspect of the present invention the flow velocity of a continuous flow of gas is alternated between a first and a second flow velocity, said first flow velocity being higher than the second velocity, said first flow velocity thereby providing a higher instantaneous heat transfer from the solid particles to the heat transfer surfaces than the second flow velocity. The flow velocity may, if needed or otherwise desired, be alternated between more than two different flow velocities.

When the flow velocity is alternated between predefined constant values, the lowest velocity should still exceed zero. The lowermost flow velocity should mainly be set to a level which prevents the fluidization nozzles from leaking or being blocked by particles falling into or an the nozzle openings.

In systems where the fluidization gas of the HTC provides a considerable part of the combustion air into the system a minimum flow velocity of gaslair has to be maintained in order not to cause instability to the system. Also a certain minimum flow velocity of air may be needed in order to prevent reducing conditions and increased corrosion attack an heat transfer surfaces from arising.

Due to above mentioned reasons, the minimum value of the periodically varying fluidization gas flow velocity in the HTC should preferably be maintained at a level corresponding to at least 10%, preferably at least 20%, of the maximum value of the periodically varying fluidization gas flow velocity in the HTC.

The flow velocity of the gas being introduced into the heat transfer chamber may also be periodically varied according to e.g. a step-wise function, a saw-tooth function, a sine function or the like. The form of the function, as such, normally is not important. The form of the function generally depends an the construction of the means providing the periodically varying flow of fluidizing gas and/or means for varying a parameter of the periodical flow of fluidizing gas. In order to be able to vary the average flow of fluidizing gas and the effective heat transfer rate, it should be possible to vary at least one of the parameters of the function.

As mentioned earlier, the heat transfer coefficient in a bubbling fluidized bed typically changes from a low value to a much higher value rather abruptly within a narrow fluidizing gas flow velocity range. The heat transfer coefficient reaches a maximum at a certain flow velocity and decreases again at higher flow velocities. In the following, the fluid velocity range, where the heat transfer coefficient for instantaneous heat transfer changes from 60 % of its maximum to 80 % of its maximum, is called the "transition velocity range" and the fluid flow velocities lower than the "transition velocity range" are called "low" velocities and fluid flow velocities higher than the "transition velocity range" are called "high" velocities.

In a preferred embodiment said periodically varying fluidizing gas flow velocity depends on time as a time dependent step-function, i.e. a function, the value of which alternates between two constants, one of which represents a "low" velocity and the other a "high" velocity. Thus, the parameters of the periodical flow are the durations and velocities of the "high" and "low" parts of a flow period. During the sub-period when the velocity is "high", there is high instantaneous heat transfer rate in the heat transfer surfaces. When the velocity is "low" the instantaneous heat transfer is low. When the periodical function is such, that the bed is always or most of the time in the "high" state, the effective or average overall heat transfer rate is high. When the proportion of the "high" velocity is small, the effective heat transfer rate is low.

The periodically varying gas flow velocity function does not necessarily have to be a step-function alternating between two constants, but can, if desired, be another suitable time dependent function, however, preferably varying within a range limited by a "low" and a "high" velocity, the "low" and "high" velocities preferably being predetermined.

Figure la schematically illustrates a periodical, step-wise alternating flow function. t₁ is the duration of the "high" flow velocity and t₂ that of the "low" flow velocity. At points denoted by i) and ii) in figure la, as also in other examples 1b, 1c and 1d, the effective heat transfer rate increases from a low value to an intermediate value and from an intermediate value to a high value.

At atmospheric pressure the transition flow velocity range, separating regions of high and low heat transfer, is typically near 0.2 m/s for fine bed material and between 0.4 and 0.5 m/s for coarse bed material. Thus at ambient pressure for fine bed material, such as bed material circulating in a CFB reactor, "high" flow velocities, or the upper limit for the flow velocity, may be e.g. ≥ 0.2 m/s, typically ≥ 0.25 m/s. The difference between the "high" and "low" flow velocity being > 0.1 m/s, preferably > 0.15 m/s. Similarly, at ambient pressure for coarse bed material, such as ash material discharged from the lower part of a CFB reactor, the "high" flow velocities may be e.g. ≥ 0.4 m/s, typically ≥ 0.5 m/s. The difference between "high" and "low" flow velocities being > 0.2 m/s, preferably > 0.25 m/s respectively. The difference between the "high" and "low" flow velocity should, however, not exceed the value of the "high" flow velocity, as a minimum "low" flow velocity is to be maintained at all times, in order to prevent problems, such as agglomeration, leakage of nozzles, blockage of nozzles and instability in the system, arising with zero or too low flow velocities.

It has, however, been noted that the "high" and "low" flow velocity values strongly depend on pressure. Thus at elevated pressures, e.g. at 10 bar, the above mentioned flow velocity values may have to be divided by two or more.

The periodically varying instantaneous heat transfer coefficient of heat transfer surfaces in a fluidized bed depends besides on pressure, on the size, roundness and density of the bed particles. Thus according to one aspect of the present invention the flow velocity range, which separates "high" and "low" flow velocity values, may be hard to define as a velocity range. Alternatively, the range may be defined as the range, where the instantaneous heat transfer coefficient changes from 60 % to 80 % of its maximum value. The maximum value of instantaneous heat transfer being the maximum value practically obtainable by the specific heat transfer surfaces in the specific heat transfer chamber.

In figure la, so as also in other examples 1b, 1c and 1d, the broken horizontal line represents approximately the flow velocity range, which separates the regions of high and low heat transfer coefficients.

In a preferred embodiment the duration of the "high" flow velocity sub-period is constant, e.g. 2.0 s, and the duration of the "low" flow velocity sub-period may for heat transfer control purposes be varied between certain values, say 0 s and 10 s, to cover the desired heat transfer range. If desired the duration of "low" flow velocity sub-periods may be constant and the duration of "high" flow velocity sub-periods may be varied, or duration of both sub-periods may be varied. Sufficient mixing of the bubbling bed requires "high" velocity sub-periods within certain not too long intervals, these intervals should typically not exceed 30 s. Also, to avoid detrimental periodical variations of the temperature of the heat transfer medium or of the reactor, the sub-periods should in most cases be shorter than the corresponding thermal time constants of the system.

To filter out possible periodic thermal disturbances, e.g. cyclically varying steam temperature, the HTC may have two or more zones with separately controlled fluidizing gas inlets or two or more sets of separately controlled fluidizing gas inlets within the same area. The "high" and "low" flow velocity sub-periods may be arranged to occur in the separately controlled fluidizing gas inlets at different times in different zones or different sets of inlets. When fluidizing gases to the different inlets have their "high" flow velocities at different times, the risk for cyclical temperature variations is minimized. If the HTC has N zones, the periodic flow velocities are preferably operated with 360 degrees / N phase differences.

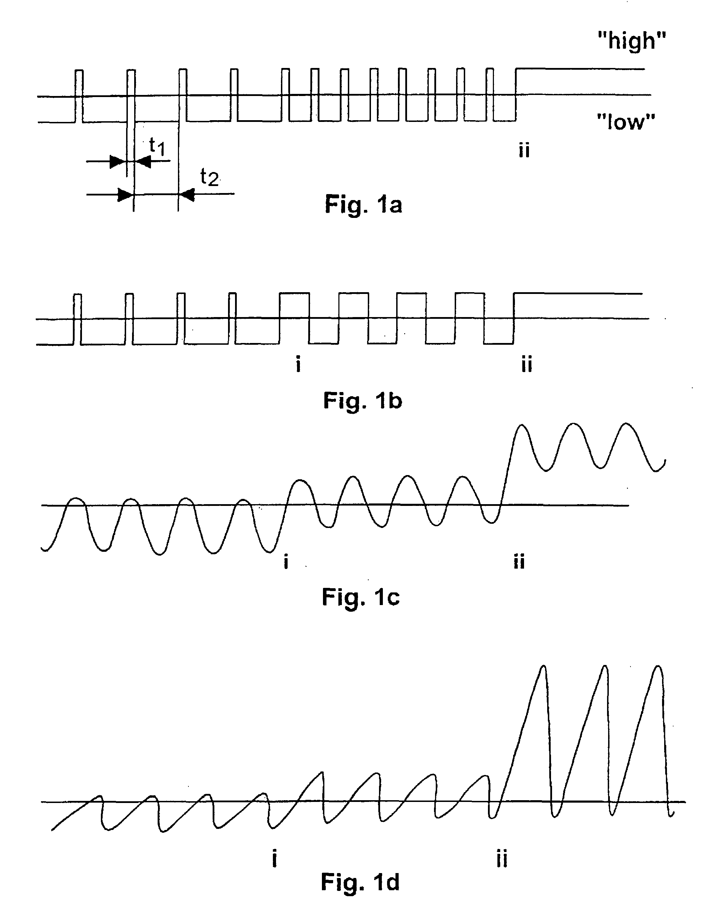

The periodic flow function may be of many other forms than the function described above. Because the effective heat transfer rate is in practice a complicated function of many parameters, any one of the parameters or any combination of them can be used as control variables. Figure 1b shows, as another example, a step function, where the ratio of the durations of the "high" and "low" sub-periods is used as a control parameter.

The periodic flow function does not have to be a step-function, but it can be, e.g., a sine function or a sawtooth-function with a variable offset or a sawtooth-function with a variable amplitude. Figures 1c and 1d show, as further examples, a sine function and a sawtooth-function, which could be used as periodic flow functions.

In test runs performed, the effective heat transfer coefficient of the heat transfer surfaces in an HTC varied typically between 100 W/m2K and 400 W/m2K. In these runs, the periodical fluidizing gas flow velocity was of the type shown in figure la. The duration of the "high" flow sub-period was kept constant, typically 1 s, and that of the "low" sub-period was varied. With 10 s "low" sub-period duration, the heat transfer constant was 100 W/m2K and with 0 s it was 400 W/m2K. The. heat transfer coefficient varied with intermediate durations substantially linearly between these extreme values. A useful control range from 100 $ to 25 % was thus obtained.

An additional feature of this invention is that based an a need, which is observed e.g. by monitoring the temperature of the medium which convects the heat from the HTC, the rate of heat transfer from a fluid bed is adjusted by varying a parameter of the periodically varying velocity of the fluidizing gas in an HTC. The duration of high velocity gas flow sub-periods and low velocity gas flow sub-periods may also be altered according to a preset program to provide the desired heat transfer in said heat transfer chamber, i.e. for said temperature to reach the preset value.

When trying to establish stable conditions in processes utilizing fluidized bed reactors, a man familiar with this technology normally aims to avoid all types of variations in the system, not to cause them. Surprisingly it has now been found out that the heat transfer in the fluidized bed reactor can be controlled by expressly periodically varying the flow velocity using an appropriate flow function in a heat transfer chamber therein.

An observation behind this invention is that, due to the heat capacities involved in the system, such as metal tubes, fluid medium etc., it is possible to use periodically varying control procedures. Moreover, by using a periodically varying control procedure - with a not too long period - an ideally controllable operation can be obtained.

This invention is cost-effective and can easily be applied to practice, because in many cases it can be made operational by only minor changes in the existing HTC gas velocity control equipment.

By the procedure disclosed herein the response time of the heat transfer system is short, because the time constant of the gas flow is of the order of a few seconds and that of the heat transfer surfaces typically also at most only some tens of seconds. By using different values for the parameters of the periodical velocity of the fluidizing gas flow, a wide control range, e.g. from 100% to 25%, can be obtained.

### BRIEF DESCRIPTION OF THE DRAWINGS

The above and other objects, features and advantages of the present invention will become apparent from the following description, reference being made to the accompanying drawings, in which:
- FIGS. 1a to 1d: show graphs depicting periodical variations in flow velocity;
- FIG. 2: is a schematic cross sectional view of the lower part of a bubbling fluidized bed reactor according to an exemplary embodiment of the present invention;
- FIG. 3: is a schematic cross sectional view of a circulating fluidized bed reactor according to another exemplary embodiment of the present invention and
- FIGS. 4 and 5: are schematic cross sectional views of circulating fluidized bed reactors according to other exemplary embodiments of the present invention.

### DETAILED DESCRIPTION OF THE INVENTION

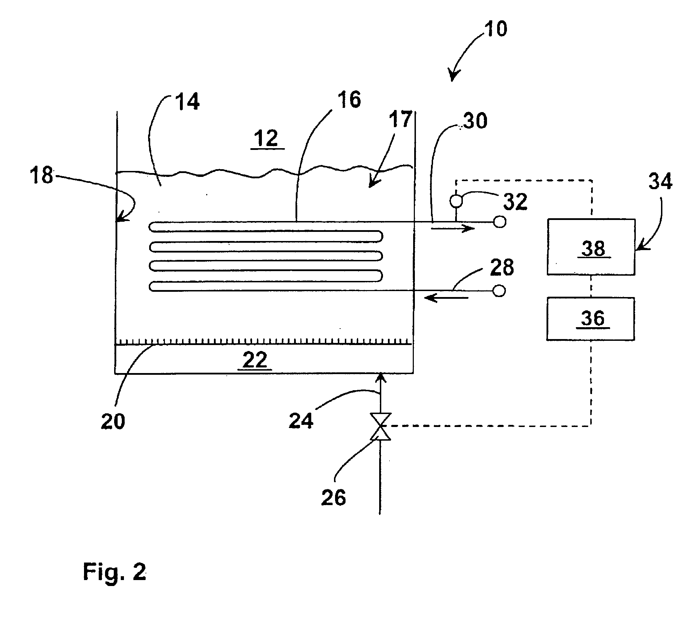

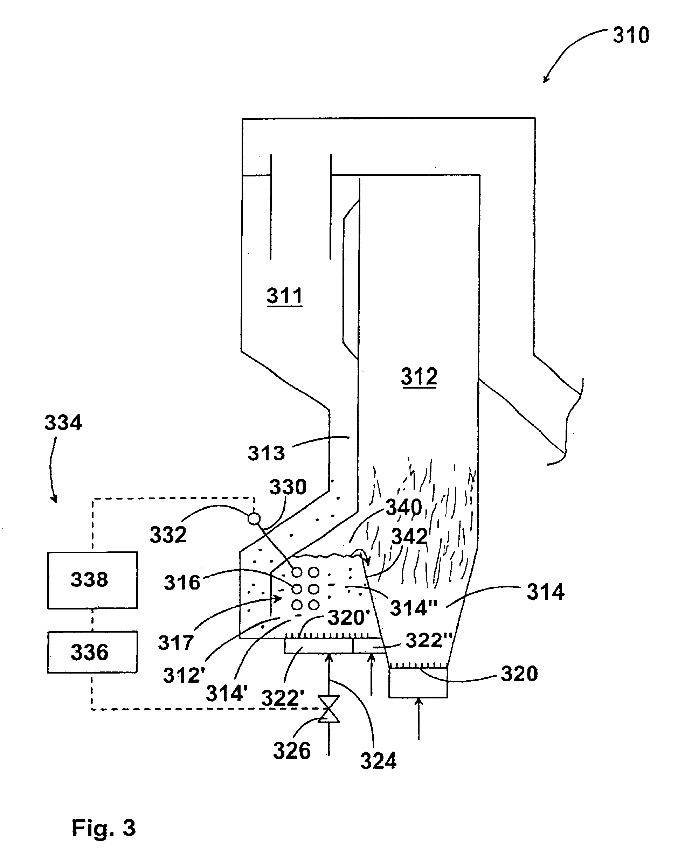

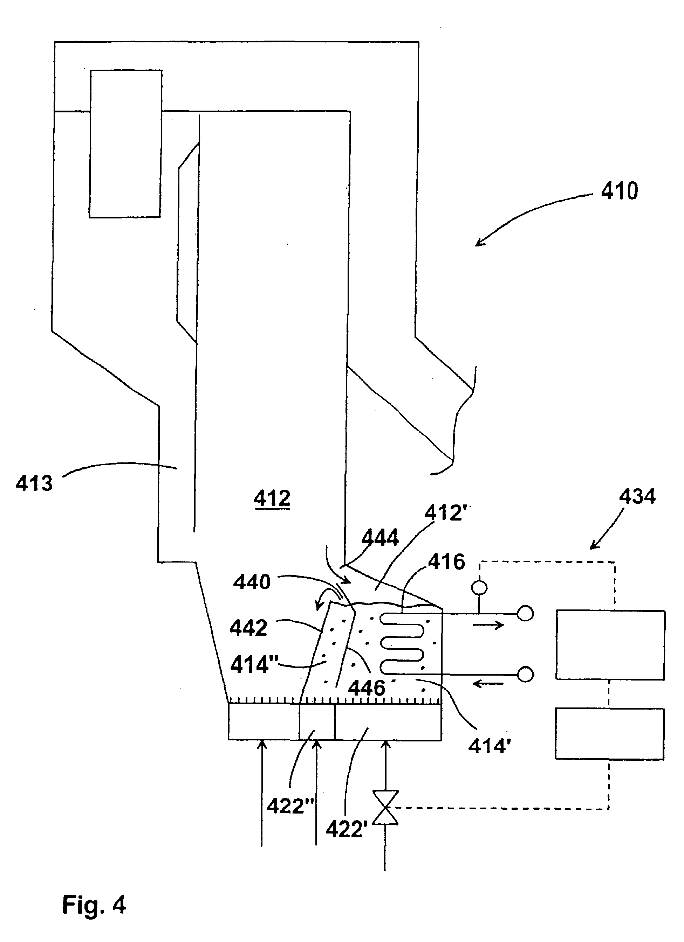

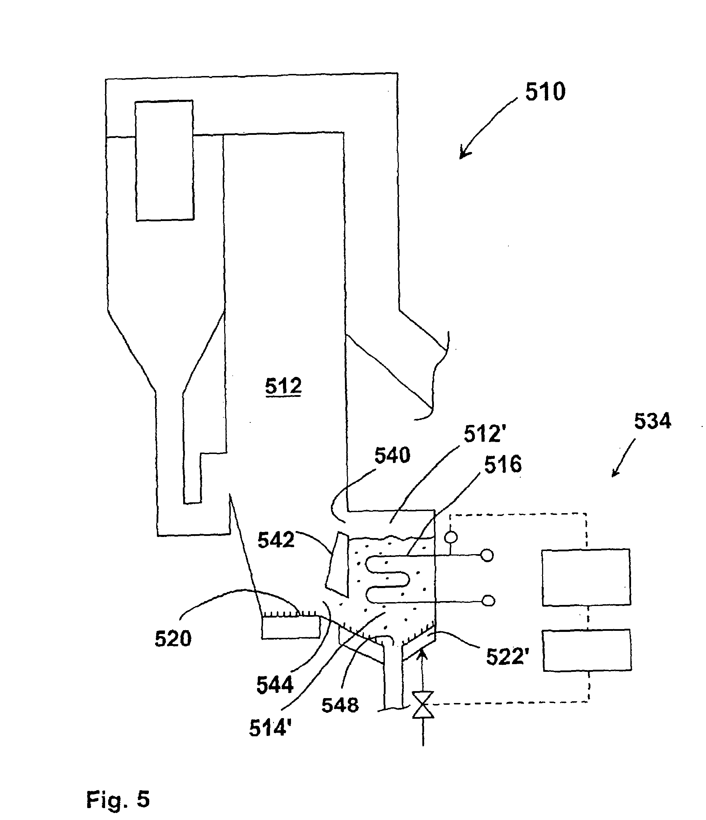

Referring now to the figures, the same reference numerals as in FIG. 2 will designate the same parts in FIGS. 3 to 5. Reference numerals in FIG. 3 being, however, preceded by a 3 and reference numerals in FIGS. 4 and 5 being preceded by a 4 or 5 correspondingly.

The method and apparatus of the present invention will first be described in connection with bubbling fluidized bed reactor 10, the lower part of the reactor chamber 12 thereof shown in FIG. 2 of the drawings.

FIG. 2 shows a very simple embodiment of the present invention, a fluidized bed reactor chamber 12 acting both as a processing chamber, such as combustion chamber, and a heat transfer chamber (HTC). A bubbling fluidized bed 14 is provided in the reactor chamber 12. Heat transfer surfaces 16 forming a heat exchanger system 17 are disposed within the fluidized bed 14 for recovering heat from the solid particles therein. Additionally or alternatively the walls 18 of the reactor chamber may be formed of heat transfer surfaces for providing a heat exchanger system.

A fluidizing air distribution grid 20 forms the bottom of the reactor chamber 12. Fluidizing gas, such as air, is introduced from a wind box 22 through the grid 20 into the reactor chamber 12. A fluidizing gas inlet conduit 24 provides fluidizing gas into the wind box 22. A control means 26, such as a valve or similar, is provided for controlling the flow of fluidizing gas through the grid and thereby controlling the flow velocity of gas or air in the reactor chamber 12.

Heat transfer medium, such as water or steam, is introduced into the heat exchanger 17 for flow through the heat transfer surfaces 16, through heat transfer medium inlet conduit 28 and discharged at a higher temperature from the reactor chamber through heat transfer medium outlet conduit 30.

A temperature measuring or monitoring means 32, such as a thermometer, is disposed in the heat transfer medium outlet conduit 30, for monitoring the heat transported out of the heat exchanger and the need of change in heat transfer rate in the heat exchanger 17. The temperature monitoring means is disposed in the heat transfer medium flow downstream the heat transfer surfaces 16. The monitoring means 32 is connected to a control unit 34, controlling the introduction of fluidizing gas into the reactor chamber 12.

The control unit 34 includes
- a function generator 36, which controls the control means 26, such as one or several valves, in the inlet conduit or conduits 24, to render possible a periodically varying fluidizing gas flow velocity in the reactor chamber 12; and
- an adjustment means 38, which is capable of adjusting parameters in the periodically varying gas flow velocity on the basis of signals from the temperature monitoring means 32 or otherwise given signals. The periodical gas flow velocity, generated by control unit 34 and control means 26, can be one of the types shown in FIGS. la to 1d.

The present invention may be applied to other bubbling fluidized bed reactors, as well, into which heat is transported by some other way than combustion.

Figure 3 shows a schematic cross sectional view of a circulating fluidized bed, CFB, reactor 310, with reactor chamber 312, particle separator 311 and return duct 313. The reactor chamber 312 is a processing chamber, such as a combustion chamber, with a fast bed 314 of particles therein. The circulation of bed material in the CFB reactor 310 is controlled by controlling the introduction of fluidizing gas through the bottom 320 of the processing chamber. As circulating fluidized bed reactors are well known, their structure or operation is not described here in detail.

A heat transfer chamber, HTC, 312' is disposed in communication with the return duct 313, so that particles separated in the particle separator 311 flow through the heat transfer chamber 312' on their way back to the processing chamber 312. A bubbling fluidized bed is formed in the heat transfer chamber of the solid particles passing therethrough. The heat transfer chamber 312' and the bed of solid particles therein constitute a gas seal between the lower part of the reactor chamber 312 and the particle separator 311. Solid particles from the bed are reintroduced from the heat transfer chamber 312' into the processing chamber 312 by overflow through opening 340 in a common wall 342 between the chambers 312 and 312'.

Heat transfer surfaces 316 are disposed in the fluidized bed in the chamber 312', for recovering heat from the solid particles circulating in the CFB system. In the specific embodiment of the present invention shown in FIG. 3, the heat transfer surfaces 316 are disposed in a heat transfer zone 314' at a distance from the opening 340, so that a second zone 314'' of the bed close to the common wall 342 does not contain heat transfer surfaces. The wind box below the grid 320' is divided into two separate portions 322', introducing fluidizing gas into the bed zone 314' including heat transfer surfaces, and 322'', introducing fluidizing gas into the zone 314'' without heat transfer surfaces. Thus it is possible to separately control fluidization of bed zones 314' and 314''. Control of fluidizing gas introduced into the wind box 322 " close to the common wall 342 controls discharge of solid particles by overflow through opening 340.

Control of fluidizing gas introduced into the wind box 322' controls the heat transfer from solid bed particles to heat transfer surfaces 316 according to the present invention.
A valve 326 is disposed in a conduit 324 introducing gas into the wind box 322'. A control unit 334, with a function generator 336 and adjustment means 338, as well as, a temperature measurement device 332 connected to the outlet conduit 330 of the heat exchanger system 317 is provided, for controlling the heat transfer.

FIG. 4 is a schematic cross sectional view of another circulating fluidized bed reactor 410 according to another embodiment of the present invention. In this reactor 410 the heat transfer chamber 412' is disposed adjacent the processing or combustion chamber 412 of the reactor, but not in communication with the return duct 413 thereof.

An inlet opening 444 is provided in a common wall portion 442 between the processing chamber 412 and the heat transfer chamber 412' for introducing solid particles from the internal circulation of the processing chamber into the heat transfer chamber. Additionally an outlet opening 440 is provided in the common wall portion 442 for recirculating solid particles by overflow from the heat transfer chamber 412' into the processing chamber 412.

The heat transfer chamber is divided into a heat transfer zone 414', including heat transfer surfaces 416 and directly connected to the inlet opening 444, and a second zone 414'' forming a transport zone and being connected to the outlet opening 440, for recycling solid particles into the processing chamber. Both zones are fluidized separately through wind boxes 422' and 422'', respectively. A partition wall 446 is provided in the upper part of the heat transfer chamber between upper portions of zones 414' and 414'', for preventing direct flow of particles between the upper portions.

The introduction of fluidizing gas through wind box 422' is controlled by a control unit 434 similar to control units shown in FIGS. 2 and 3, for controlling the heat recovery in heat transfer chamber 412'.

FIG. 5 is a schematic cross sectional view of another circulating fluidized bed reactor 510 according to still another embodiment of the present invention. In this reactor 510, having a combustion chamber 512, the heat transfer chamber 512' connected thereto is an ash cooler arranged to receive bed material discharged from the lower part of the combustion chamber 512. Heat transfer surfaces 516 are disposed in the heat transfer chamber 512', for recovering heat from the system.

Bed material is discharged from the combustion chamber 512 into the heat transfer chamber 512' through an opening 544 in a common wall portion 542 close to the bottom 520 of the combustion chamber. Another opening 540 is arranged above the opening 544 for allowing gas and fine solid material to flow from the heat transfer chamber 512' into the combustion chamber 512. An ash discharge opening 548 is arranged in the bottom of the heat transfer chamber 512', for discharging ash from the system. The heat transfer chamber 512' is not divided into two separate zones as solid material is not essentially recycled into the combustion chamber.

The introduction of fluidizing gas through a wind box 522' into the heat transfer chamber is controlled by a control unit 534 similar to control units shown in FIGS. 2 to 4, for controlling the heat recovery in heat transfer chamber 512'.

The form of the reactor or the heat transfer chamber may vary greatly from what has been shown in enclosed exemplary embodiments. It has been indicated that the fluidized bed reactor may be a combustor. The invention may, of course, be applied to other processes, as well, such as heat recovery in connection with hot gas cooling.

While, in the shown embodiments of the present invention control of heat transfer has been based on monitoring the temperature of heat transfer fluid immediately as it leaves the heat transfer chamber, the control may be based on other monitoring or measurements suitable. Also the need for changing heat transfer rate may be based on monitoring or measurements, at various locations within or outside the system. The control system may be designed to be controlled automatically or manually.

## Claims

1. A method of controlling heat transfer in a fluidized bed reactor, said fluidized bed reactor having:
- a heat transfer chamber (12, 312', 412', 512') with a bed (14,314',414',514') of solid particles therein, means (22,322', 422', 522') for introducing fluidizing gas into the heat transfer chamber for fluidizing said bed of solid particles therein and heat transfer surfaces (16,316,416,516) in contact with said bed of solid particles in said heat transfer chamber;
into which heat transfer chamber fluidizing gas is continuously introduced to fluidize the bed of solids particles therein and to cause heat to be transferred from the fluidized bed of solid particles to the heat transfer surfaces by the solid particles moving in contact with the heat transfer surfaces,
**characterized by**,
while continuously varying the flow velocity of the fluidizing gas introduced into the heat transfer chamber between two or more different positive flow velocities according to a periodical function,
varying a parameter of the flow velocity function of the fluidization gas being continuously introduced into the heat transfer chamber,
for varying the fluidization of the solid particle bed and thereby controlling the instantaneous heat transfer from solid particles to said heat transfer surfaces in said heat transfer chamber.

2. The method defined in claim 1, wherein the flow velocity of gas being continuously introduced into the heat transfer chamber is alternated between a first and a second flow velocity, said first flow velocity being higher than the second velocity, said first flow velocity thereby providing a higher heat transfer from the solid particles to the heat transfer surfaces than the second flow velocity.

3. The method defined in claim 1, wherein the flow velocity of gas being introduced into the heat transfer chamber is varied periodically according to a step-wise or saw-tooth function or a sin-function.

4. The method defined in claim 1, wherein the flow velocity of gas being introduced into the heat transfer chamber is varied periodically between an upper and lower limit velocity, where for fine bed materials, such as bed material in a circulating fluidized bed reactor, the "upper" limit being > 0.2 m/s, preferably > 0.25 m/s and the difference between the "upper" and "lower" limit being > 0.1 m/s, preferably > 0.15 m/s.

5. The method defined in claim 1, wherein the flow velocity of gas being introduced into the heat transfer chamber is varied periodically between an upper and lower limit velocity, where for coarse materials, such as solid material in an ash cooler, the "upper" limit being > 0.4 m/s, preferably > 0.5 m/s and the difference between the "upper" and "lower" limit being > 0.2 m/s, preferably > 0.25 m/s.

6. The method defined in claim 1, wherein
- the flow velocity of gas being introduced into the heat transfer chamber is varied periodically between an "upper" and "lower" limit velocity and
- the instantaneous heat transfer coefficient, for heat being transferred from solid particles in said heat transfer chamber to said heat transfer surfaces, at said lower limit velocity is less than 60 % of its maximum value and at said upper limit velocity more than 80 % of its maximum value.

7. The method defined in claim 1, wherein the flow of gas being introduced into the heat transfer chamber is varied between a high velocity gas flow and a low velocity gas flow, and the duration of high velocity gas flow sub-period is constant and duration of low velocity gas flow sub-period is varied, for controlling heat transfer in the heat transfer chamber.

8. The method defined in claim 7, wherein the duration of low velocity gas flow is <30s, preferably between 0 to 10s.

9. The method defined in claim 1, wherein flow of gas being introduced into the heat transfer chamber is varied between a high velocity gas flow and a low velocity gas flow, and the duration of a low velocity gas flow sub-period is constant and the duration of a high velocity gas flow sub-period is varied, for controlling heat transfer in the heat transfer chamber.

10. The method defined in claim 1, wherein the flow of fluidizing gas being introduced into at least a first and a second zone of the heat transfer chamber is controlled separately, for preventing periodic thermal disturbances in the system.

11. The method defined in claim 1, wherein said fluidized bed reactor further comprises a processing chamber, such as a combustion chamber, in solid particle flow communication with said heat transfer chamber, and heat generated in the combustion chamber is recovered with heat transfer surfaces in said heat transfer chamber.

12. The method defined in claim 11, wherein the heat transfer chamber is an ash cooler and heat is recovered from ash discharged from the fluidized bed reactor.

13. The method defined in claim 1, wherein said fluidized bed reactor is a circulating fluidized bed reactor, including a reactor chamber and a solid particle separator, and said heat transfer chamber is connected to a return duct connecting said particle separator to a lower part of said reactor chamber, and heat generated in the combustion chamber is recovered with heat transfer surfaces in said heat transfer chamber.

14. The method defined in claim 1, wherein
- change in heat transfer need is monitored and
- said means for introducing fluidizing gas into the heat transfer chamber is controlled to provide the monitored change in heat transfer need.

15. The method defined in claim 1, wherein
- the temperature of heat transfer medium, such as hot water or steam, provided by said heat transfer surfaces, is monitored and compared to a preset value, and
- the duration of high velocity gas flow sub-periods and low velocity gas flow sub-periods is altered according to a preset program to provide the desired heat transfer in said heat transfer chamber, for said temperature to reach the preset value.

16. Apparatus for controlling heat transfer in a fluidized bed reactor, said fluidized bed reactor having:
- a heat transfer chamber (12,312',412',512') with a bed (14,314',414',514') of solid particles therein,
- means (22,322',422',522') for continuously introducing fluidizing gas into the heat transfer chamber for fluidizing said bed of solid particles therein, and
- heat transfer surfaces (16,316,416,516) in contact with said bed of solid particles in said heat transfer chamber, **characterized by**, the fluidized bed reactor further having
- means (34,334,434,534) for continuously varying the flow velocity of fluidizing gas introduced into said heat transfer chamber between two or more different positive flow velocities according to a periodical function, said means for varying the fluidization including means for varying a parameter of the periodical flow velocity function, for controlling the instantaneous heat transfer from solid particles to said heat transfer surfaces in said heat transfer chamber.

17. The apparatus according to claim 16, wherein said means for varying the fluidization further include
- means (32,332) for monitoring the need of change of heat transfer in the heat transfer chamber, and
- means (38,338) for processing said monitored need of change of heat transfer into a change of parameter of periodical flow velocity.

18. The apparatus according to claim 17, wherein
- said means for monitoring the need or need of change of cheat transfer in the heat transfer chamber includes temperature measuring means, arranged to measure the temperature of heat transfer medium having transported heat out from the heat transfer chamber.

19. The apparatus according to claim 16, wherein
- said means for varying the fluidization include a valve means (26,326) for controlling the velocity of gas flow being introduced into the heat transfer chamber.

20. The apparatus according to claim 16, wherein said fluidized bed reactor further comprises a processing chamber (312,412,512), such as a combustion chamber, in solid particle flow communication with said heat transfer chamber.

21. The apparatus according to claim 20, wherein the heat transfer chamber (512 ^{t} ) is an ash cooler for discharging coarse solid bed material from the processing chamber.

22. The apparatus, according to claim 16, wherein said fluidized bed reactor is a circulating fluidized bed reactor, including a reactor chamber (312) and a solid particle separator (311), and said heat transfer chamber (312') is connected to a return duct (313) connecting said particle separator to a lower part of said reactor chamber.

## Patentansprüche

1. Verfahren zur Regelung der Wärmeübertragung in einem Wirbelschichtreaktor, der Wirbelschichtreaktor bestehend aus:
- einer Wärmeübertragungskammer (12, 312', 412', 512') mit einem Bett (14, 314', 414', 514') von Feststoffpartikeln darin, Mitteln (22, 322', 422', 522') zur Einführung von Fluidisierungsgas in die Wärmeübertragungskammer zur Fluidisierung des Betts aus Feststoffpartikeln darin und Wärmeübertragungsflächen (16, 316, 416, 516) in Verbindung mit dem Bett aus Feststoffpartikeln in der Wärmeübertragungskammer;
in welche Wärmeübertragungskammer Fluidisierungsgas kontinuierlich eingeführt wird zur Fluidisierung des Betts von Feststoffpartikeln darin und um die Übertragung von Wärme aus der Wirbelschicht von Feststoffpartikeln auf die Wärmeübertragungsflächen durch die Feststoffpartikel zu veranlassen, die sich in Kontakt mit den Wärmeübertragungsflächen bewegen,
**gekennzeichnet durch**,
während die Strömungsgeschwindigkeit des in die Wärmeübertragungskammer eingeführten Fluidisierungsgases nach einer periodischen Funktion zwischen zwei oder mehreren verschiedenen positiven Strömungsgeschwindigkeiten kontinuierlich variiert wird,
Variieren eines Parameters der Strömungsgeschwindigkeitsfunktion des kontinuierlich in die Wärmeübertragungskammer eingeführten Fluidisierungsgases
fürs Variieren der Fluidisierung des Feststoffpartikelbetts und **dadurch** zur Regelung der momentanen Wärmeübertragung von Feststoffpartikeln auf die Wärmeübertragungsflächen in der Wärmeübertragungskammer.

2. Verfahren nach Anspruch 1, **dadurch gekennzeichnet, dass** die Strömungsgeschwindigkeit des kontinuierlich in die Wärmeübertragungskammer eingeführten Fluidisierungsgases zwischen einer ersten und einer zweiten Strömungsgeschwindigkeit variiert wird, wobei die erste Strömungsgeschwindigkeit höher als die zweite Geschwindigkeit ist, welche erste Strömungsgeschwindigkeit dadurch eine höhere Wärmeübertragung von den Feststoffpartikeln auf die Wärmeübertragungsflächen ergibt als die zweite Strömungsgeschwindigkeit.

3. Verfahren nach Anspruch 1, **dadurch gekennzeichnet, dass** die Strömungsgeschwindigkeit des in die Wärmeübertragungskammer eingeführten Gases periodisch nach einer schrittweisen oder Sägezahnfunktion oder einer Sinusfunktion variiert wird.

4. Verfahren nach Anspruch 1, **dadurch gekennzeichnet, dass** die Strömungsgeschwindigkeit des in die Wärmeübertragungskammer eingeführten Gases periodisch zwischen einer oberen und unteren Grenzgeschwindigkeit variiert wird, wobei für feine Bettmaterialien, wie etwa für das Bettmaterial in einem Reaktor mit zirkulierender Wirbelschicht die "obere" Grenze > 0,2 m/s, bevorzugt > 0,25 m/s und die Differenz zwischen der "oberen" und "unteren" Grenze > 0,1 m/s, bevorzugt > 0,15 m/s ist.

5. Verfahren nach Anspruch 1, **dadurch gekennzeichnet, dass** die Strömungsgeschwindigkeit des in die Wärmeübertragungskammer eingeführten Gases periodisch zwischen einer oberen und unteren Grenzgeschwindigkeit variiert wird, wobei für grobe Materialien, wie etwa Feststoff in einem Aschenkühler die "obere" Grenze > 0,4 m/s, bevorzugt > 0,5 m/s und die Differenz zwischen der "oberen" und "unteren" Grenze > 0,2 m/s, bevorzugt > 0,25 m/s ist.

6. Verfahren nach Anspruch 1, **dadurch gekennzeichnet, dass**
- die Strömungsgeschwindigkeit des in die Wärmeübertragungskammer eingeführten Gases periodisch zwischen einer "oberen" und "unteren" Grenzgeschwindigkeit variiert wird und
- der momentane Wärmeübertragungskoeffizient für von Feststoffpartikeln in der Wärmeübertragungskammer auf die Wärmeübertragungsflächen übertragene Wärme bei der unteren Grenzgeschwindigkeit weniger als 60 % von ihrem Maximalwert und bei der oberen Grenzgeschwindigkeit mehr als 80 % von ihrem Maximalwert ist.

7. Verfahren nach Anspruch 1, **dadurch gekennzeichnet, dass** die Strömung des in die Wärmeübertragungskammer eingeführten Gases zwischen einer Hochgeschwindigkeits-Gasströmung und einer Niedriggeschwindigkeits-Gasströmung variiert wird, und die Zeitdauer der Subperiode Hochgeschwindigkeits-Gasströmung konstant ist, und Zeitdauer der Subperiode Niedriggeschwindigkeits-Gasströmung variiert wird zur Regelung der Wärmeübertragung in der Wärmeübertragungskammer.

8. Verfahren nach Anspruch 7, **dadurch gekennzeichnet, dass** die Zeitdauer der Niedriggeschwindigkeits-Gasströmung < 30 s, bevorzugt zwischen 0 bis 10 s ist.

9. Verfahren nach Patentanspruch 1, **dadurch gekennzeichnet, dass** die Strömung des in die Wärmeübertragungskammer eingeführten Gases zwischen einer Hochgeschwindigkeits-Gasströmung und einer Niedriggeschwindigkeits-Gasströmung variiert wird, und die Zeitdauer einer Subperiode Niedriggeschwindigkeits-Gasströmung konstant ist, und die Zeitdauer einer Subperiode Hochgeschwindigkeits-Gasströmung variiert wird zur Regelung der Wärmeübertragung in der Wärmeübertragungskammer.

10. Verfahren nach Patentanspruch 1, **dadurch gekennzeichnet, dass** die Strömung von Fluidisierungsgas, das in zumindest eine erste und eine zweite Zone der Wärmeübertragungskammer eingeführt wird, getrennt geregelt wird zur Verhinderung von periodischen thermischen Störungen im System.

11. Verfahren nach Patentanspruch 1, **dadurch gekennzeichnet, dass** der Wirbelschichtreaktor weiter eine Aufbereitungskammer, wie eine Brennkammer, in Feststoffpartikel-Fließverbindung mit der Wärmeübertragungskammer umfasst, und in der Brennkammer erzeugte Wärme mittels Wärmeübertragungsflächen in der Wärmeübertragungskammer zurückgewonnen wird.

12. Verfahren nach Patentanspruch 1, **dadurch gekennzeichnet, dass** die Wärmeübertragungskammer ein Aschenkühler ist, und Wärme aus aus dem Wirbelschichtreaktor abgezogener Asche zurückgewonnen wird.

13. Verfahren nach Patentanspruch 1, **dadurch gekennzeichnet, dass** der Wirbelschichtreaktor ein Reaktor mit zirkulierender Wirbelschicht ist, der eine Reaktionskammer und einen Feststoffpartikel-Abscheider umfasst, und die Wärmeübertragungskammer mit einem Rückführkanal verbunden ist, der den Partikelabscheider mit einem unteren Teil der Reaktionskammer verbindet, und in der Brennkammer erzeugte Wärme mittels Wärmeübertragungsflächen in der Wärmeübertragungskammer zurückgewonnen wird.

14. Verfahren nach Patentanspruch 1, **dadurch gekennzeichnet, dass**
- Änderung des Wärmeübertragungsbedarfs überwacht wird und
- die Mittel zur Einführung von Fluidisierungsgas in die Wärmeübertragungskammer gesteuert werden, um die festgestellte Änderung in Wärmeübertragungsbedarf zu erfassen.

15. Verfahren nach Patentanspruch 1, **dadurch gekennzeichnet, dass**
- die Temperatur des Wärmeträgers, wie Heißwasser oder -dampf, die sich durch die Wärmeübertragungsflächen ergibt, überwacht und mit einem voreingestellten Wert verglichen wird, und
- die Zeitdauer der Subperioden Hochgeschwiridigkeits-Gasströmung und Subperioden Niedriggeschwindigkeits-Gasströmung nach einem voreingestellten Programm geändert wird, um die gewünschte Wärmeübertragung in der Wärmeübertragungskammer herbeizuführen, damit die Temperatur den voreingestellten Wert erreichen würde.

16. Vorrichtung zur Regelung der Wärmeübertragung in einem Wirbelschichtreaktor, der Wirbelschichtreaktor bestehend aus:
- einer Wärmeübertragungskammer (12, 312', 412', 512') mit einem Bett (14, 314', 414', 514') von Feststoffpartikeln darin,
- Mitteln (22, 322', 422', 522') zur kontinuierlichen Einführung von Fluidisierungsgas in die Wärmeübertragungskammer zur Fluidisierung des Betts von Feststoffpartikeln darin, und
- wärmeübertragungsflächen (16, 316, 416, 516) in Kontakt mit dem Bett von Feststoffpartikeln in der Wärmeübertragungskammer,
**dadurch gekennzeichnet, dass** der Wirbelschichtreaktor des Weiteren
- Mittel (34, 334, 434, 534) aufweist fürs kontinuierliche Variieren der Strömungsgeschwindigkeit von in die Wärmeübertragungskammer eingeführtem Fluidisierungsgas zwischen zwei oder mehreren verschiedenen positiven Strömungsgeschwindigkeiten nach einer periodischen Funktion, welche Mittel fürs Variieren der Fluidisierung Mittel zur Änderung eines Parameters der periodischen Strömungsgeschwindigkeitsfunktion umfassen, zur Regelung der momentanen Wärmeübertragung von Feststoffpartikeln auf die Wärmeübertragungsflächen in der Wärmeübertragungskammer.

17. Vorrichtung nach Patentanspruch 16, **dadurch gekennzeichnet, dass** die Mittel zur Änderung der Fluidisierung des Weiteren umfassen
- Mittel (32, 332) zur Überwachung des Bedarfs zur Änderung der Wärmeübertragung in der Wärmeübertragungskammer, und
- Mittel (38, 338) zur Verarbeitung des festgestellten Bedarfs zur Änderung der Wärmeübertragung zu einer Änderung von Parameter der periodischer Strömungsgeschwindigkeit.

18. Vorrichtung nach Patentanspruch 17, **dadurch gekennzeichnet, dass**
- die Mittel zur Überwachung des Bedarfs oder Änderungsbedarfs der Wärmeübertragung in der Wärmeübertragungskammer Temperaturmessmittel umfasssen, die zur Messung der Temperatur von Wärmeträger angeordnet sind, der Wärme aus der Wärmeübertragungskammer heraustransportiert hat.

19. Vorrichtung nach Patentanspruch 16, **dadurch gekennzeichnet, dass**
- die Mittel zur Änderung der Fluidisierung ein Ventilorgan (26, 326) umfassen zur Regelung der Geschwindigkeit der Gasströmung, die in die Wärmeübertragungskammer eingeführt wird.

20. Vorrichtung nach Patentanspruch 16, **dadurch gekennzeichnet, dass** der Wirbelschichtreaktor weiter eine Aufbereitungskammer (312, 412, 512), wie etwa eine Brennkammer in Feststoffpartikel-Fließverbindung mit der Wärmeübertragungskammer umfasst.

21. Vorrichtung nach Patentanspruch 20, **dadurch gekennzeichnet, dass** die Wärmeübertragungskammer (512') ein Aschenkühler ist zur Ableitung von grobem festem Bettmaterial aus der Aufbereitungskammer.

22. Vorrichtung nach Patentanspruch 16, **dadurch gekennzeichnet, dass** der Wirbelschichtreaktor ein Reaktor mit zirkulierender Wirbelschicht ist, der eine Reaktionskammer (312) und einen Feststoffpartikel-Abscheider (311) umfasst, und die Wärmeübertragungskammer (312') mit einem Rückführkanal (313) verbunden ist, der den Partikelabscheider mit einem unteren Teil der Reaktionskammer verbindet.

## Revendications

1. Procédé pour réguler le transfert thermique dans un réacteur à lit fluidisé, ledit réacteur à lit fluidisé ayant :
- une chambre de transfert thermique (12, 312', 412', 512') avec un lit (14, 314', 414', 514') de particules solides à l'intérieur, des moyens (22, 322', 422', 522') pour introduire le gaz fluidisant dans la chambre de transfert thermique pour fluidiser ledit lit de particules solides à l'intérieur et des surfaces de transfert thermique (16, 316, 416, 516) en contact avec ledit lit de particules solides dans ladite chambré de transfert thermique ;
dans lequel le gaz fluidisant dans la chambre de transfert thermique est introduit en continu pour fluidiser le lit de particules solides à l'intérieur et pour transférer la chaleur du lit fluidisé de particules solides vers les surfaces de transfert thermique au moyen des particules solides se déplaçant en contact avec les surfaces de transfert thermique ;
**caractérisé en ce que**,
tout en faisant varier en continu la vitesse d'écoulement du gaz fluidisant introduit dans la chambre de transfert thermique entre deux ou plusieurs vitesses d'écoulement positives différentes selon une fonction périodique,
la variation d'un paramètre de la fonction de vitesse d'écoulement du gaz de fluidisation introduit en continu
dans la chambre de transfert thermique,
en vue de faire varier la fluidisation du lit de particules solides et réguler ainsi le transfert thermique instantané des particules solides vers lesdites surfaces de transfert thermique dans ladite chambre de transfert thermique.

2. Procédé défini selon la revendication 1, dans lequel la vitesse d'écoulement de gaz introduit en continu dans la chambre de transfert thermique alterne entre une première et une deuxième vitesse d'écoulement, ladite première vitesse d'écoulement étant supérieure à la deuxième vitesse, ladite première vitesse d'écoulement fournissant. ainsi un transfert thermique supérieur à partir des ^{"} particules solides vers les surfaces de transfert thermique supérieur à la deuxième vitesse d'écoulement.

3. Procédé défini selon la revendication 1, dans lequel la vitesse d'écoulement du gaz introduit dans la chambre de transfert thermique varie périodiquement selon une fonction par palier ou en dent de scie ou une fonction sinusoïdale.

4. Procédé défini selon la revendication 1, dans lequel la vitesse d'écoulement du gaz introduit dans la chambre de transfert thermique varie périodiquement entre une vitesse limite supérieure et inférieure, où pour des matières fines de lit, telles qu'une matière de lit dans un réacteur à lit fluidisé circulant, la limite "supérieure" étant >0,2 m/s, de préférence >0,25 m/s et la différence entre la limite "supérieure" et "inférieure" étant >0/1 m/s, de préférence >0,15 m/s.

5. Procédé défini selon la revendication 1, dans lequel la vitesse d'écoulement du gaz introduit dans la chambre de transfert thermique varie périodiquement entre une vitesse limite supérieure et inférieure, où pour des matières grossières, telles qu'une matière solide dans un refroidisseur de cendres, la limite "supérieure" étant >0,4 m/s, de préférence >0,5 m/s et la différence entre la limite "supérieure" et "inférieure" étant >0,2 m/s, de préférence >0,25 m/s.

6. Procédé défini selon la revendication 1, dans lequel :
- la vitesse d'écoulement du gaz introduit dans la chambre de transfert thermique varie périodiquement entre une vitesse limite "supérieure" et "inférieure" et
- le coefficient de transfert thermique instantané, pour que la chaleur soit transférée des particules solides dans ladite chambre de transfert thermique vers lesdites surfaces de transfert thermique, à ladite vitesse limite inférieure, est inférieur à 60% de sa valeur maximale, et, à ladite vitesse limite supérieure, est supérieur à 80% de sa valeur maximale. '

7. Procédé défini selon la revendication 1, dans lequel l'écoulement du gaz introduit dans la chambre de transfert thermique varie entre un écoulement gazeux à vitesse élevée et un écoulement gazeux à faible vitesse, et la durée de la sous-période d'écoulement gazeux à vitesse élevée est constante et la durée de sous-période d'écoulement gazeux à faible vitesse varie, en vue de réguler le transfert thermique dans la chambre de transfert thermique.

8. Procédé défini selon la revendication 7, dans lequel la durée d'écoulement gazeux à faible vitesse est <30 s, et est de préférence compris entre 0 et 10 s.

9. Procédé défini selon la revendication 1, dans lequel l'écoulement de gaz introduit dans la chambre de transfert thermique varie entre un écoulement gazeux à vitesse élevée et un écoulement gazeux à faible vitesse, et la durée d'une sous-période d'écoulement gazeux à faible vitesse est constante et la durée d'une sous-période d'écoulement gazeux à vitesse élevée varie, en vue de réguler le transfert thermique, dans la chambre, de transfert thermique.

10. Procédé défini selon la revendication 1, dans lequel l'écoulement de gaz fluidisant introduit dans au moins une première et une deuxième zone de la chambre de transfert thermique est régulé séparément, pour empêcher les perturbations thermiques périodiques dans le système.

11. Procédé défini selon la revendication 1, dans lequel ledit réacteur à lit fluidisé comprend de plus une chambre de traitement, telle qu'une chambre de combustion, en communication d'écoulement de particules solides avec ladite chambre de transfert thermique, et la chaleur engendrée dans la chambre de combustion est récupérée avec les surfaces du transfert, thermique dans ladite chambre de transfert thermique.

12. Procédé défini selon la revendication 11, dans lequel la chambre de transfert thermique est un refroidisseur de cendres et la chaleur est récupérée à partir des cendres déchargées du réacteur à lit fluidisé.

13. Procédé défini selon la revendication 1, dans lequel ledit réacteur à lit fluidisé est un réacteur à lit fluidisé circulant, incluant une chambre de réaction et un séparateur de particules solides, et ladite chambre de transfert thermique est connectée à une canalisation de retour reliant ledit séparateur de particules à une partie inférieure de ladite chambre de réaction, et la chaleur engendrée dans la chambre de combustion est récupérée avec les surfaces de transfert thermique dans ladite chambre de transfert thermique.

14. Procédé défini selon la revendication 1, dans lequel :
- un changement dans le besoin d'un transfert thermique est surveillé ; et
- ledit moyen pour introduire un gaz fluidisant dans la chambre de transfert thermique est régulé pour fournir le surveillé dans le besoin d'un transfert thermique.

15. Procédé défini selon la revendication 1, dans lequel :
- la température du milieu de transfert thermique, tel que de l'eau chaude ou de la vapeur d'eau, fournie par lesdites surfaces de transfert thermique, est contrôlée et comparée à une valeur préréglée ; et
- la durée des sous-périodes d'écoulement gazeux à vitesse élevée et des sous-périodes d'écoulement gazeux à faible vitesse est modifiée selon un programme pré-établi pour fournir le transfert thermique souhaité dans ladite chambre de transfert thermique, pour que ladite température atteigne la valeur préréglée.

16. Appareil pour réguler le transfert thermique dans un réacteur à lit fluidisé, ledit réacteur à lit fluidisé ayant
- une chambre de transfert thermique (12, 312', 412', 512') avec un lit (4, 314', 414', 514') de particules solides à l'intérieur ;
- des moyens (22, 322', 422', 522') pour introduire en continu un gaz fluidisant dans la chambre de transfert thermique pour fluidiser ledit lit de particules solides à l'intérieur ; et
- des surfaces de transfert thermique (16, 316, 416, 516) en contact avec ledit lit de particules solides dans ladite chambre de transfert thermique,
**caractérisé en ce que**, le réacteur à lit fluidisé possède de plus :
- des moyens (34, 334, 434, 534) pour faire varier en continu la vitesse d'écoulement de gaz fluidisant introduit dans ladite chambre de transfert thermique entre deux ou plusieurs différentes vitesses d'écoulement positives selon une fonction périodique, lesdits moyens pour faire varier la fluidisation incluant un moyen pour faire varier un paramètre de la fonction de vitesse d'écoulement périodique, en vue de réguler le transfert thermique instantané des particules solides vers lesdites surfaces de transfert thermique dans ladite chambre de transfert thermique.

17. Appareil selon la revendication 16, dans lequel lesdits moyens pour faire varier la fluidisation incluent de plus :
- des moyens (32, 332) pour surveiller le besoin de changement de transfert thermique dans la chambre de transfert thermique ; et
- des moyens (38, 338) pour traiter ledit besoin surveillé de changement de transfert thermique en un changement de paramètre de vitesse d'écoulement périodique.

18. Appareil selon la revendication 17, dans lequel :
- lesdits moyens pour surveiller le besoin ou le besoin de changement de transfert thermique dans la chambre de transfert thermique, comprend un moyen mesurant la température, disposé pour mesurer la température du milieu de transfert thermique dont la chaleur est transportée hors de la chambre de transfert thermique.

19. Appareil selon la revendication 16, dans lequel :
- lesdits moyens pour faire varier la fluidisation incluent un moyen de vanne (26, 326) pour réguler la vitesse d'écoulement gazeux introduit dans la chambre de transfert thermique.

20. Appareil selon la revendication 16, dans lequel ledit réacteur à lit fluidisé comprend de plus une chambre de traitement (312, 412, 512), telle qu'une chambre de combustion, en communication d'écoulement de particules solides avec ladite chambre de transfert thermique.

21. Appareil selon la revendication 20, dans lequel la chambre de transfert thermique (512') est un refroidisseur de cendres pour décharger, de la 'chambre de traitement, la matière de lit de solide grossier.

22. Appareil selon la revendication 16, dans lequel ledit réacteur à lit fluidisé est un réacteur à lit fluidisé circulant, comprenant une chambre de réaction (312) et un séparateur de particules solides (311), et ladite chambre de transfert thermique (312') est reliée à une canalisation de retour (313) reliant ledit séparateur de particules à une partie inférieure de ladite chambre de réacteur.
